**Europäisches Patentamt**

(19) **European Patent Office**

**Office européen des brevets**

(11) Veröffentlichungsnummer: **0 108 160**
**B1**

(12) **EUROPÄISCHE PATENTSCHRIFT**

(45) Veröffentlichungstag der Patentschrift:
23.04.86

(51) Int. Cl.⁴: **H 04 N 1/036**

(21) Anmeldenummer: **82110242.3**

(22) Anmeldetag: **06.11.82**

(54) Verfahren zur Einstellung und Überwachung eines Belichtungsflecks.

(43) Veröffentlichungstag der Anmeldung:
16.05.84 Patentblatt 84/20

(73) Patentinhaber: **DR.-ING. RUDOLF HELL GmbH,**
**Grenzstrasse 1-5, D-2300 Kiel 14 (DE)**

(45) Bekanntmachung des Hinweises auf die Patenterteilung:
23.04.86 Patentblatt 86/17

(72) Erfinder: **Schulz-Hennig, Jörg, Gartenweg 7,**
**D-2305 Heikendorf (DE)**

(84) Benannte Vertragsstaaten:
**AT BE CH DE FR GB IT LI NL SE**

(56) Entgegenhaltungen:
**DE - C - 2 107 738**
**FR - A - 2 125 977**

**PATENTS ABSTRACTS OF JAPAN, Band 6, Nr.**
**144(E-122(1022), 3. August 1982**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

### Technisches Gebiet

Die Erfindung bezieht sich auf das Gebiet der Reproduktionstechnik, insbesondere auf die punktweise Filmbelichtung, für die Aufzeichnung von Rastern, Halbtonbildern und Strichzeichen in der Scannertechnik, wobei der Belichtungsfleck hinsichtlich Lichtleistung, Grösse, Flankensteilheit (Schärfe) und Intensitätsverteilung zur Erzielung eines gleichmässigen und kontrastreichen Belichtungsergebnisses festgelegt ist.

### Stand der Technik

Bei der Herstellung von gerasterten Farbauszügen auf Fotomaterial in der Drucktechnik werden heute sog. Scanner verwendet, bei denen die Rasterpunkte mit Hilfe eines Mehrspuraufzeichnungsorgans auf das Fotomaterial aufbelichtet werden. Diese Art der Aufzeichnung mit mehreren, nebeneinander angeordneten Lichtstrahlen, wie sie z.B. in der DE-C3-2107738 (entspricht FR-A-2125977) beschrieben ist, erfordert eine genaue Justierung der Teilstrahlen, damit zwischen den einzelnen Teilstrahlen Zeilenanschluss herrscht und keine nicht belichteten Streifen auf dem Film entstehen.

Bei der heute üblichen Scannertechnik wird diese Einstellung und Einhaltung der Punkteigenschaften indirekt durch Testbelichtungen kontrolliert und die Schärfe auch durch Abstandslehren u.dgl. gemessen bzw. eingestellt, wobei eine ständige Kontrolle durch den Benutzer notwendig ist. Insbesondere bei der Beurteilung einer falschen, d.h. ungewollten Intensitätsverteilung anhand von Belichtungsergebnissen ist eine Korrektur wegen der Faltung mit der Gradationskurve des Filmes nur iterativ, d.h. mit erheblichem Material- und Zeitverlust, möglich.

### Aufgabenstellung

Der vorliegenden Erfindung liegt die Aufgabe zugrunde, ein Verfahren anzugeben, mit dem Lichtleistung, Abmessung, Schärfe und Intensitätsverteilung des Belichtungsfleckes vollautomatisch gesteuert und kontrolliert werden können. Die Erfindung erreicht dies durch die in den Patentansprüchen 1 bis 4 angegebenen Merkmale. Vorteilhafte Weiterbildungen der Erfindung sind in den Patentansprüchen 5 bis 8 angegeben. Dabei kann der Punkt durch Überlappung mehrerer von z.B. 12 verschiedenen Teilstrahlen mit gaussförmigem Strahlprofil gebildet werden und die Grösse des Punktes durch den Abbildungsmassstab einer Variooptik und dessen Intensitätsverteilung durch die Einzelamplituden, gesteuert durch einen Lichtmodulator, bestimmt werden. Gleichzeitig kann mit der vorliegenden Erfindung eine automatisch nichtbehebbare Veränderung, z.B. Ausfall eines Kanals, Dejustierung o.ä., erkannt und die Ursache eingekreist werden. Endlich ist es hiermit möglich, Kenngrössen für elektromechanische oder optische Stellglieder zu ermitteln.

Die Erfindung wird im folgenden anhand der Fig. 1-7 näher erläutert:

Es zeigen:

Fig. 1 eine schematische Darstellung der Bildung eines Belichtungsfleckes aus 12 Teilstrahlen,

Fig. 2 ein Funktionsdiagramm zur Messung der Intensitätsverteilung des Belichtungsfleckes,

Fig. 3 eine Darstellung der Intensitätsverteilung innerhalb des Belichtungsfleckes,

Fig. 4 ein Funktionsdiagramm zur Messung und Korrektur der Grösse des Belichtungsfleckes,

Fig. 5 ein Funktionsdiagramm zur Messung und Korrektur der Scharfstellung des Belichtungsfleckes,

Fig. 6 den Verlauf einer Intensitätsverteilung des Belichtungsfleckes ohne lokale Minima, und

Fig. 7 ein weiteres Beispiel eines Funktionsdiagramms zur Messung und Korrektur der Scharfstellung des Belichtungsfleckes,

Fig. 8 eine Einrichtung zur Erzeugung einer Relativbewegung zwischen Belichtungsfleck und Spalt durch einen mechanischen Vorschub der optischen Anordnung,

Fig. 9 eine Einrichtung zur Erzeugung einer Relativbewegung zwischen Belichtungsfleck und Spalt durch einen linearen Vorschub der Messeinrichtung mit Spalt,

Fig. 10 eine Einrichtung zur Erzeugung einer Relativbewegung zwischen Belichtungsfleck und Spalt durch eine optische Ablenkung mit Hilfe eines Galvanometerspiegels,

Fig. 11 eine Einrichtung zur Erzeugung einer Relativbewegung zwischen Belichtungsfleck und Spalt durch eine optische Ablenkung mit Hilfe eines rotierenden Polygonspiegels, und

Fig. 12 eine Messeinrichtung mit einem Fotodiodenfeld.

Die Erfindung wird im folgenden in ihren verschiedenen Funktionen, die auch gleichzeitig durchgeführt werden können, beschrieben. Diese sind Messung und Korrektur der Intensitätsverteilung, der Abmessungen (Zeilenanschluss), der Fokussierung und der Fehlererkennung. Prinzipiell wird bei allen Funktionen der Belichtungsfleck durch den Vorschub der Schreibeinheit über einen schmalen Spalt, der sich in der Filmebene vor einem Lichtdetektor, etwa einer Siliziumfotodiode, befindet, geführt, wobei bei der Messung in Aufzeichnungsrichtung integriert wird, und mit einem zweiten Detektor integral gemessen.

Umgekehrt kann auch der Lichtdetektor mitsamt Spalt mit einer Verschiebeeinheit an dem feststehenden Belichtungsfleck vorbeigeführt werden. Schliesslich kann durch eine optische Ablenkvorrichtung, etwa durch einen Galvanometerspiegel oder einen Polygonspiegel, der Punkt über die Detektoren gefahren werden. Statt einer mechanischen oder optischen Bewegung kann der Punkt auch auf eine CCD-Zeile mit genügender Auflösung abgebildet und elektronisch abgefragt werden.

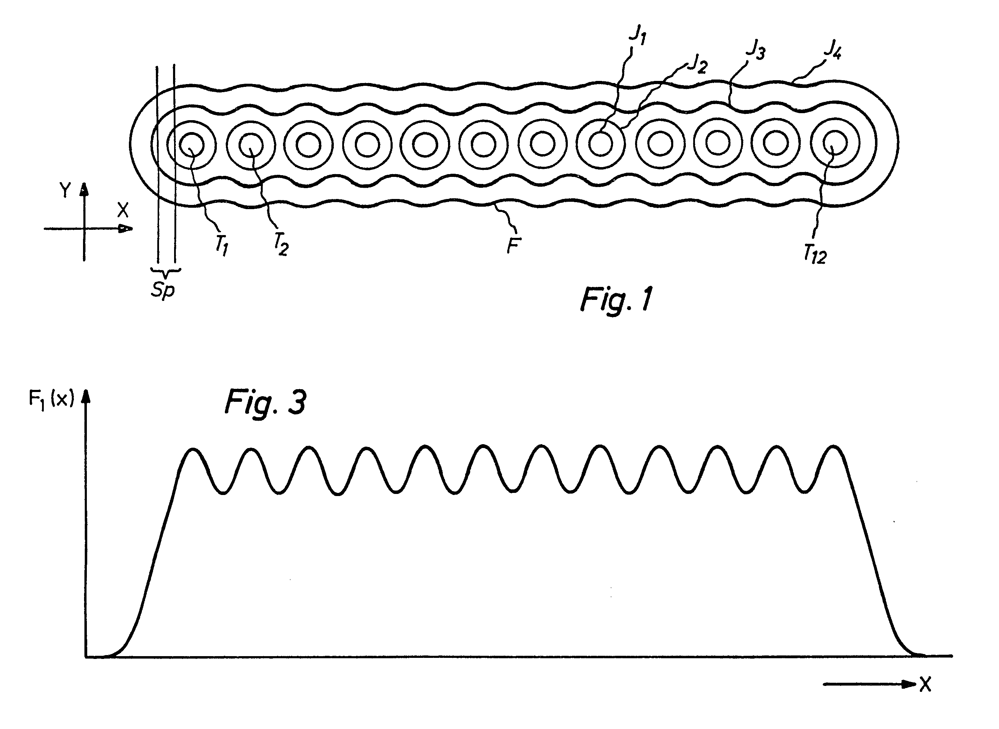

In Fig. 1 ist ein solcher Belichtungsfleck F dargestellt, der beispielsweise aus 12 Teilstrahlen ($T_1$, ..., $T_{12}$) gebildet wird, wobei die einzelnen Teilstrahlen eine Gausssche Intensitätsverteilung aufweisen und die geschlossenen gezeichneten Kurven ($J_1, J_2, ..., J_4$) Linien gleicher Leistungsdichte

darstellen sollen. Die beiden parallelen Linien sollen den Messspalt Sp darstellen, der über den Belichtungsfleck gefahren wird.

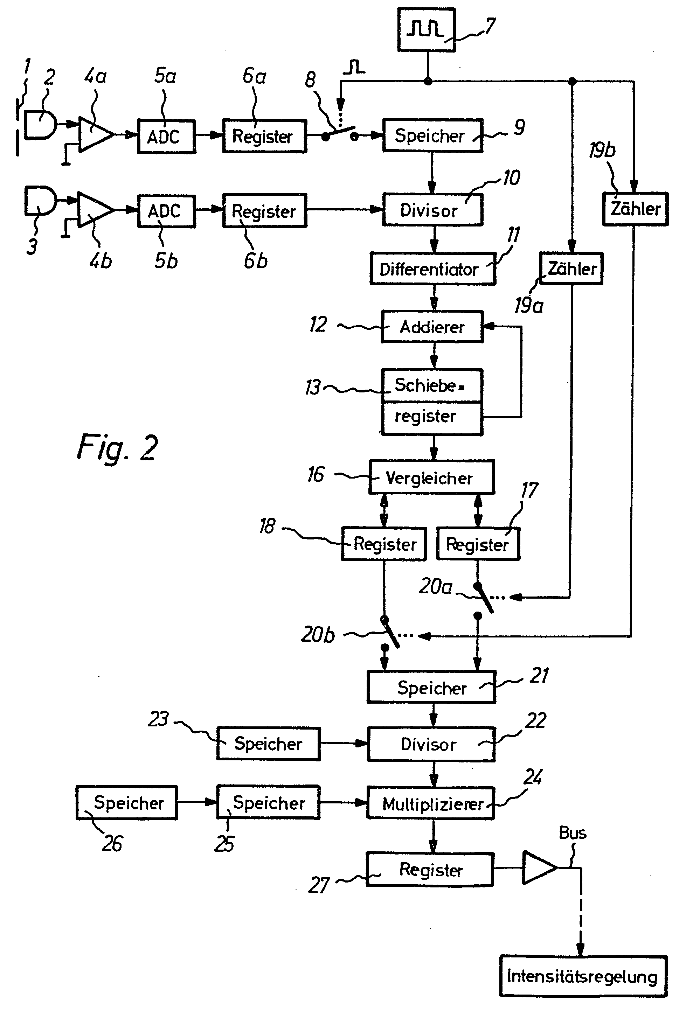

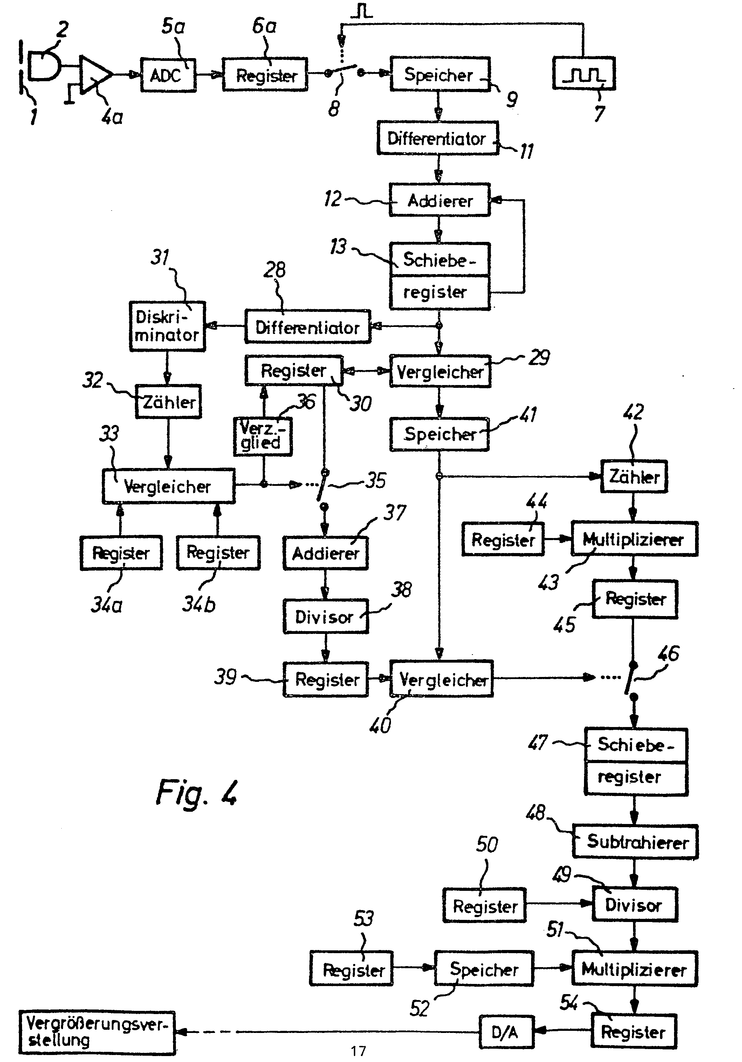

Fig. 2 zeigt ein erfindungsgemässes Funktionsdiagramm zur Messung und Korrektur der Intensitätsverteilung, wobei als Beispiel für die Sollkurve der Intensitätsverteilung der Verlauf der in Fig. 3 dargestellten Intensitätsverteilung dienen soll, der der in Fig. 1 gezeigten Form des Belichtungsflecks entspricht. Ein Einzelstrahl habe eine Halbwertbreite von 40 µm und die Spaltbreite betrage 10 µm. Das durch den schematisch dargestellten Spalt (1) auf den Detektor (2) fallende Licht wird in einem Verstärker (4a) verstärkt, in einem Analog-Digital-Wandler (5a) digitalisiert und in ein Register 6a geladen. Entsprechend wird mit dem integralen Signal auf den zweiten Detektor (3) verfahren (4b, 5b, 6b). Ein durch eine Uhr gesteuerter Taktgeber (7) betätigt einen Schalter (8) und lädt diese Amplitudenmesswerte in einen Speicher (9.) Diese werden in einem Divisor (10) durch den Ist-Integralwert aus dem Register (6b) geteilt. In einen Differentiator (11), Addierer (12) und Schieberegister (13) wird eine Dekonvolution durchgeführt, deren mathematischer Hintergrund später beschrieben wird. Hierbei wird der Differentialquotient zu einem vorher bestimmten Wert aus dem Schieberegister (13) addiert und darauf wieder in dieses Register (13) geladen. Die hiermit bestimmten Ist-Amplitudenwerte laufen in einen Vergleicher (16), der diese mit den in den Registern (17, 18) abgespeicherten bisherigen Maximal- und Minimalamplitudenwerten vergleicht und bei Unter- bzw. Überschreitung diese neu lädt. Zwei von dem Taktgeber (7) inkrementierte Zähler (19a, 19b) laden abwechselnd den in Registern 17 und 18 vorliegenden Maximal- und Minimalwert über Schalter (20a, 20b) in einen Speicher (21). Diese für die Amplitudeneinstellung charakteristischen Werte werden in einem Divisor (22) durch die in einem Speicher (23) geladenen Sollverteilungswerte geteilt. Die entstandenen Quotienten werden in einem Multiplizierer (24) mit den aus einem Speicher (25) geladenen Koeffizienten zur Steuerkennlinie multipliziert, die durch den aktuellen Amplitudensteuerwert in einem Speicher (26) ausgewählt werden. Die Produkte, die korrigierten Amplitudensteuerwerte, werden in Register (27) geladen und über einen Datenbus an eine Intensitätsregelung (z.B. Vielfrequenz-akustooptischer Modulator) gegeben.

Die Funktion der Messung und Korrektur der Grösse des Belichtungsflecks, die bei zeilenweiser Belichtung sehr exakt eingestellt sein muss, um einen Zeilenanschluss zu gewährleisten, soll am gleichen Beispiel des in Fig. 1 gezeigten Belichtungsflecks erläutert werden. Zur Erklärung dient das zugehörige erfindungsgemässe Schaltbild der Fig. 4. Wie bei der Funktion der Messung der Intensitätsverteilung wird das durch den Spalt (1) fallende Licht mit dem Detektor (2) gemessen, verstärkt (4a), digitalisiert (5a), in ein Register (6a) geladen und mit einem Taktgeber (7) über einen Schalter (8) in einen Speicher (9) abgerufen. Die Amplitudenmesswerte werden in einem

Differentiator (11) differenziert und die Differenzenquotienten zu einem vorher bestimmten Wert in einem Addierer (12) addiert und darauf in ein Schieberegister (13) geladen. Hiermit wird die Dekonvolution, wie sie im einzelnen später beschrieben wird, durchgeführt. Die hiermit bestimmten Amplitudenwerte werden in einen Differenzierer (28) und einen Vergleicher (29) geladen, der den in einem Register (30) gespeicherten Maximalwert abfragt und nachlädt, die Amplitudenwerte gelangen unverändert in einen Speicher (41). Der in dem Differentiator (28) ermittelte Steigungswert des Amplitudenverlaufs wird in einem Diskriminator (31) auf Vorzeichenwechsel abgefragt und ein Zähler (32) inkrementiert. Der Zählerstand wird in einem Vergleicher (33) mit den in 2 Registern (34a, b) gespeicherten Nummern des ersten und letzten Maximums verglichen und dann ein Schalter (35) betätigt. Dieses Signal setzt über einen Verzögerer (36) das Register (30) auf Null. Aus den erhaltenen Maximalamplitudenwerten des ersten und letzten Teilstrahls wird mit einem Addierer (37) und Divisor (38) ein Begrenzungswert ermittelt, der dem Überlappungspunkt zweier Teilstrahlen im Belichtungsfleck entspricht, in ein Register (39) geladen und in einem Vergleicher (40) mit den Amplitudenwerten verglichen, wobei vom Laden aus dem Speicher (41) ein Zähler (42) inkrementiert wird. Der Zählerwert wird in einem Multiplizierer (43) mit dem Wert der Vorschubgeschwindigkeit (Strecke pro Takt), die in einem Register (44) gespeichert ist, in den Streckenwert umgerechnet und in ein Register (45) gespeichert. Der Vergleicher (40) betätigt einen Schalter (46), über den der Streckenwert der Amplitudenwerte, die gleich dem Begrenzungswert sind, in ein Schieberegister (47) geladen wird. Ein Subtrahierer (48) bildet den Differenzwert aus dem ersten und letzten Streckenwert, der in einem Divisor (49) durch den in einem Register (50) gespeicherten Sollstreckenwert geteilt wird. Die entstandenen Quotienten werden in einem Multiplizierer (51) mit den aus einem Speicher (52) geladenen Koeffizienten zur Steuerkennlinie multipliziert, die durch die Kennwerte, die den aktuellen Stand des die Grösse steuernden Elementes (z.B. Variooptik) bestimmen und in einem Register (53) geladen sind, ausgewählt werden. Das Produkt, der korrigierte Vergrösserungswert, wird in ein Register (54) geladen und über einen Digital-Analog-Converter an die Steuerung des Vergrösserungselementes weitergegeben.

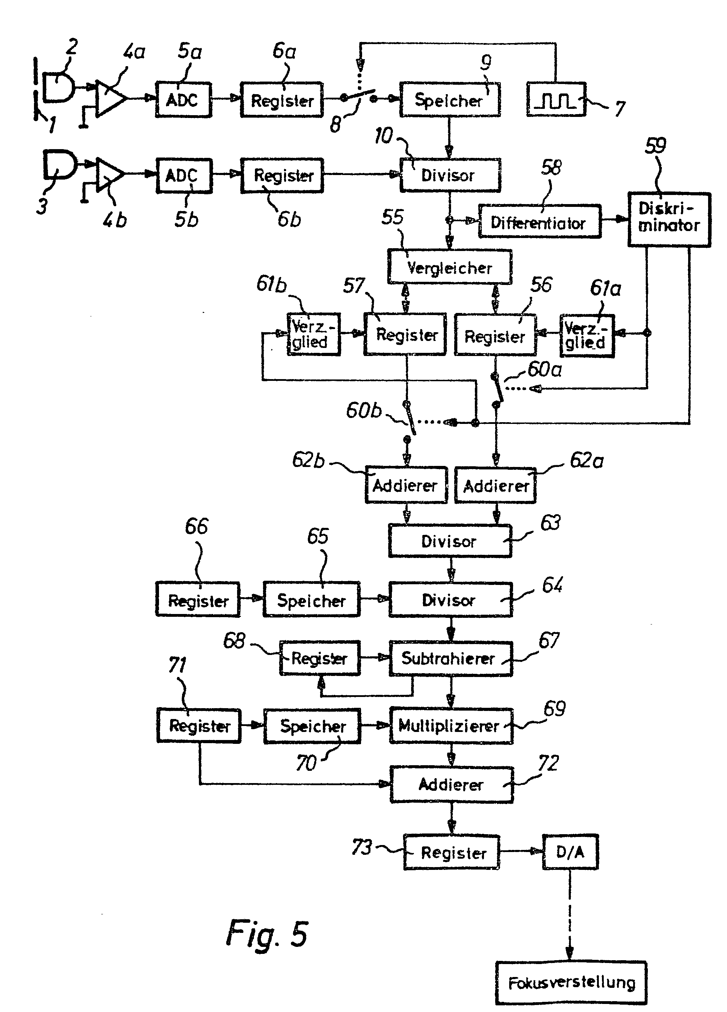

Die Funktion der Messung und Korrektur der Fokussierung wird in einem ersten erfindungsgemässen Beispiel anhand des Schaltbildes der Fig. 5 mit dem Belichtungsfleck gemäss Fig. 1 erläutert.

In diesem Fall wird von einer Anordnung des Belichtungsflecks ausgegangen, der sich aus überlagerten Gaussfunktionen gemäss Fig. 1 zusammensetzt. Das Prinzip der Schärfemessung ist die Bestimmung der Modulation der Amplitudenmesswerte, wobei eine geeignete Anzahl von Teilstrahlen, z.B. jeder zweite, ausgeschaltet ist. Diese Bestimmung läuft bis einschliesslich der Normierung im Divisor (10) der Fig. 5 wie bei der Messung der Intensitätsverteilung ab. Die normierten Amplitudenmesswerte werden in einem Vergleicher (55) mit den in Registern (56, 57) gespeicherten Maximal- und Minimalwerten verglichen und diese Register bei Über- bzw. Unterschreitung nachgeladen. Gleichzeitig werden die Amplitudenmesswerte in einem Differentiator (58) differenziert und im anschliessenden Diskriminator (59) die Vorzeichenumkehr erkannt. Bei dem Wechsel von Positiv auf Negativ wird ein Schalter (60a) betätigt, womit der Maximalwert in einen Addierer (62a) geladen wird. Der Schaltpuls setzt nach Verzögerung in einem Verzögerungsglied (61a) das Register (56) des Maximalwertes auf Null. Entsprechendes geschieht bei einem Negativ-Positiv-Wechsel mit dem Minimalwert. Die Summe der Maximalwerte wird in einem Divisor (63) durch die Summe der Minimalwerte geteilt und der Quotient in einem Divisor (64) durch einen Sollwert geteilt, der sich in einem Speicher (65) befindet und von dem aktuellen Vergrösserungswert, der in einem Register (66) geladen ist, ausgewählt wird. Dieser Quotient ist ein Mass für die Schärfe, der in einem Subtrahierer (67) von dem in einem Register (68) gespeicherten Richtungswert (+1 oder −1) abgezogen wird und ein Mass für die Korrektur darstellt. Das Vorzeichen des Richtungswertes wird nun umgekehrt. In einem Multiplizierer (69) wird der Korrekturwert mit einem aus der Steuerkennlinie, die in einem Speicher (70) abgelegt ist, multipliziert. Der Steuerkennlinienwert wird von dem aktuellen Fokussteuerwert, der sich in einem Register (71) befindet, ausgewählt. In einem Addierer (72) wird der Korrekturwert mit dem aktuellen Fokussteuerwert in dem Register (71) zum neuen Fokussteuerwert addiert und in ein Register (73) geladen. Über eine Steuerleitung wird die Fokusverstellung (z.B. eine elektromechanische Objektivscharfstellung) durchgeführt und die Schärfemessung wiederholt, da die Richtung der Korrektur nicht gemessen werden kann.

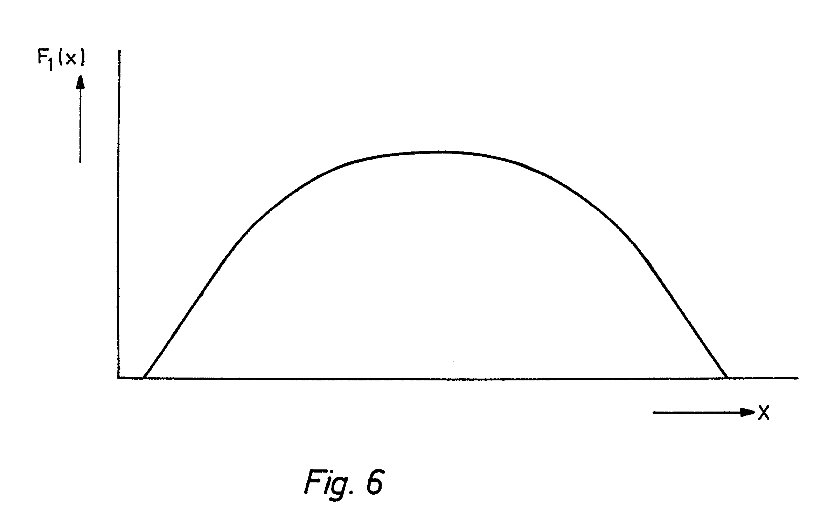

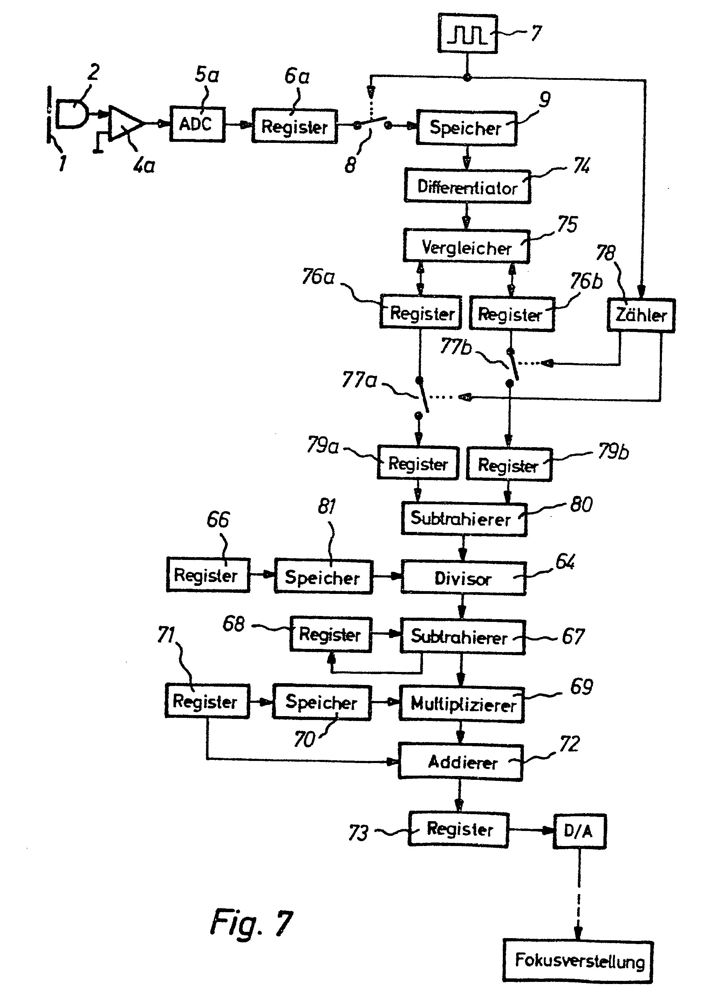

In Fig. 7 ist ein weiteres erfindungsgemässes Beispiel für die Schärfemessung und -korrektur eines Belichtungsflecks dargestellt, wobei der Belichtungsfleck keine ausgeprägten lokalen Minima enthält, wie z.B. in Fig. 6 dargestellt ist. Das Prinzip der Schärfemessung besteht hier in der Bestimmung der Flankensteilheit. Die Bestimmung der Amplitudenmesswerte geschieht wie bei der Funktion der Grössenmessung, diese werden in Fig. 7 in einem Differentiator (74) differenziert und die Werte der Differenzenquotienten in einem Vergleicher (75) mit den in Registern (76a, b) befindlichen Minima- und Maximawerten verglichen. Diese Register werden bei Unter- bzw. Überschreiten überschrieben. Nach der Abtastung des Belichtungsflecks werden Schalter (77a, b) von dem Impuls eines Zählers (78), der vom Taktgeber (7) inkrementiert wird, betätigt und die grössten Steigungsbeträge der ansteigenden und abfallenden Flanke in Register (79a, b) geladen und in einem Subtrahierer (80) addiert. Die Teilung durch den in einem Speicher (81) gespeicherten Sollwert in einem Divisor (64) ergibt einen Wert, der ein Mass für die Schärfe darstellt. Die weitere Verarbeitung ist identisch der im ersten Fall beschriebenen.

Im folgenden wird der weiter oben angedeutete Ablauf der Dekonvolutionsrechnung näher dargelegt.

Gegeben sei die Funktion $F_0 = f(x, y)$, wobei $F_0$ stetig differenzierbar ist mit

$$F_0 \geqslant 0 \ \forall \ x \in (x_0, x_1), \ y \in (y_0, y_1)$$
$$= 0 \quad \text{ausserhalb}$$

Es sei ferner:

$$F_1 = f(x) : F_1(x) = \int_{y_0}^{y_1} F_0(x, y') dy' \qquad (1)$$

$F_1$ ist auch stetig differenzierbar, und es gilt:

$$F_1 \geqslant 0 \ \forall \ x \in (x_0, x_1)$$
$$= 0 \quad \text{ausserhalb}$$

Das Abfragen einer Funktion $F_1(x)$ durch eine Funktion $F_2(x')$ ergibt den gefalteten Wert $\tilde{\mathcal{F}}(x)$ mit

$$\tilde{\mathcal{F}}(x) \equiv F_1(x) \ast F_2(x) = \int_{-\infty}^{\infty} F_1(x-\tau) \cdot F_2(\tau) \, d\tau \qquad (2)$$

Die Beleuchtungsdichteverteilung eines Belichtungsflecks lässt sich durch eine Funktion $F_0$ beschreiben. Der in einer Richtung (y) integrierte Wert ist dann durch die Funktion $F_1(x)$ gegeben. Ein paralleler Spalt von genügender Höhe integriert in y-Richtung. Deshalb lässt sich das Abtasten der Funktion $F_0(x, y)$ in x-Richtung mit einem Spalt durch die eindimensionale Funktion $\tilde{\mathcal{F}}(x)$ (2) beschreiben. Ein solcher Spalt mit der Breite S wird durch die Rechteckfunktion beschrieben.

$$F_2(x') = \begin{cases} 1 \ \forall \ x' \in \left(x-\dfrac{S}{2}, x+\dfrac{S}{2}\right) \\ 0 \ \forall \ x' : x-\dfrac{S}{2} > x' \geqslant x+\dfrac{S}{2} \end{cases} \qquad (3)$$

Gleichung (3) eingesetzt in Gleichung (2) ergibt

$$\tilde{\mathcal{F}}(x) = \int_{x-\frac{S}{2}}^{x+\frac{S}{2}} F_1(x-\tau) \, d\tau \qquad (4)$$

$$\frac{d\,\tilde{\mathcal{F}}(x)}{dx} = F_1\left(x+\frac{S}{2}\right) - F_1\left(x-\frac{S}{2}\right) \qquad (5)$$

Bestimmt werden soll $F_1(x)$:

$$F_1\left(x+\frac{S}{2}\right) = \frac{d\,\tilde{\mathcal{F}}(x)}{dx} + F_1\left(x-\frac{S}{2}\right) \qquad (6)$$

Wegen der Beschränkung des Belichtungsflecks auf das Gebiet $[x_0, x_1] \times [y_0, y_1]$ existieren x, für die

$$F_1\left(x-\frac{S}{2}\right) = 0, \quad \frac{d\,\tilde{\mathcal{F}}(x)}{dx} \neq 0$$

gilt, so dass durch sukzessive Bestimmung von (6) vom Rand (= Abtasten) die Funktion $F_1(x)$ für alle $x \in [x_0, x_1]$ bestimmt werden kann.

Bei der Realisierung in der beschriebenen Form wird statt dx ein durch den Takt gegebenes x verwendet und statt des Differentialquotienten der Differenzenquotient gebildet. Statt Gleichung (6) wird dann mit der Gleichung:

$$F_1\left(x+\frac{S}{2}-\frac{\Delta x}{2}\right) = \frac{\tilde{\mathcal{F}}(x) - \tilde{\mathcal{F}}(x-\Delta x)}{\Delta x} + F_1\left(x-\frac{S}{2}-\frac{\Delta x}{2}\right) \qquad (6')$$

gerechnet.

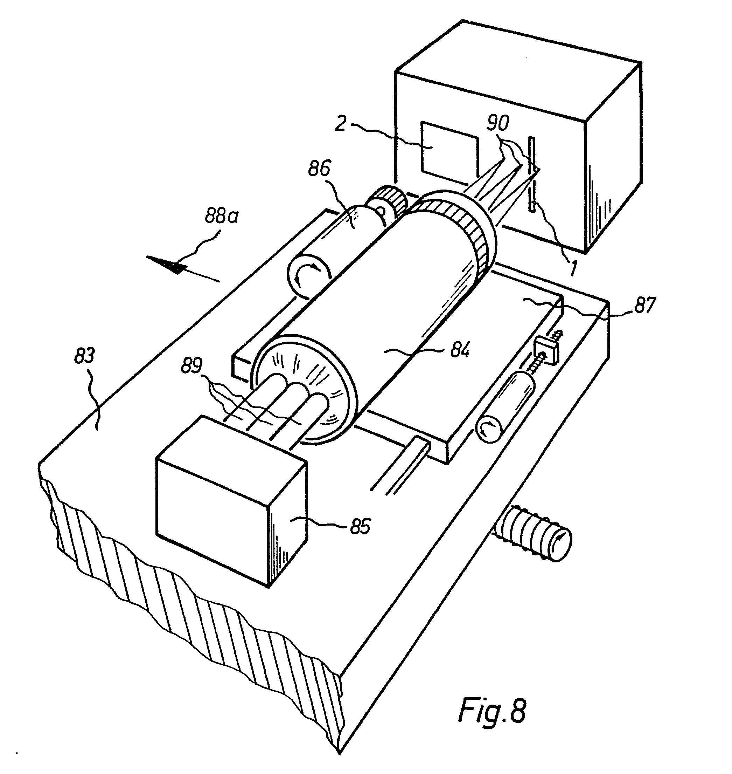

In Fig. 8 ist eine Einrichtung zur Erzeugung einer Relativbewegung zwischen Belichtungsfleck (90) und dem Spalt (1) durch einen mechanischen Vorschub der optischen Belichtungsanordnung (83), der durch den Pfeil (88a) angedeutet ist, dargestellt. Es wird die gesamte optische Belichtungsanordung verschoben, die eine Einrichtung (85) zur Einstellung der Amplituden der Teilstrahlen (89) – im vorliegenden Falle 3 –, eine Variooptik (84) mit Vergrösserungseinstellung (86) und Fokuseinstellung (87) enthält.

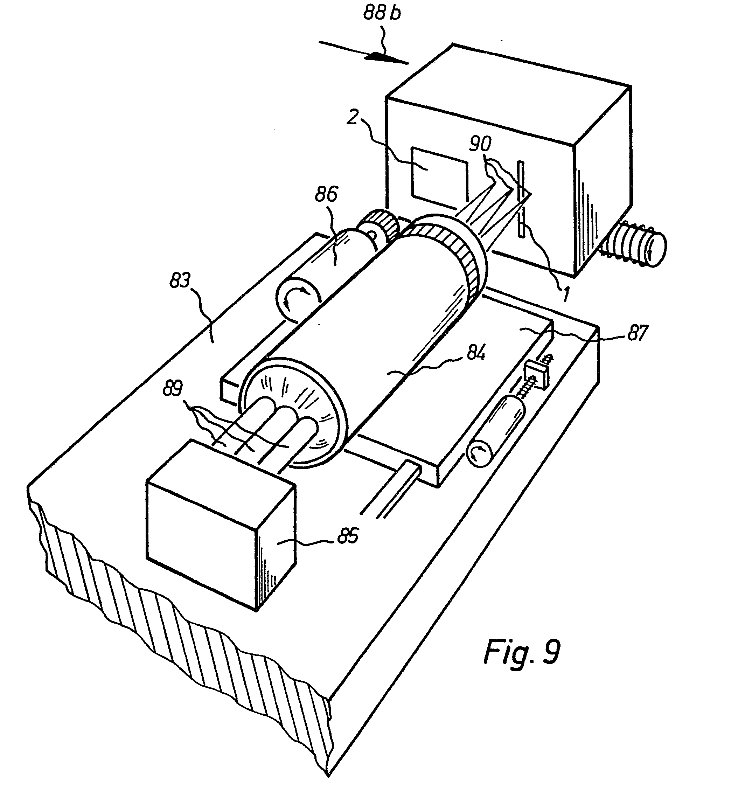

In Fig. 9 ist die gleiche optische Anordnung wie in Fig. 8 dargestellt, bei der die Relativbewegung, wie durch den Pfeil (88b) angedeutet, durch einen linearen Vorschub der Messeinrichtung mit Spalt (1) erfolgt.

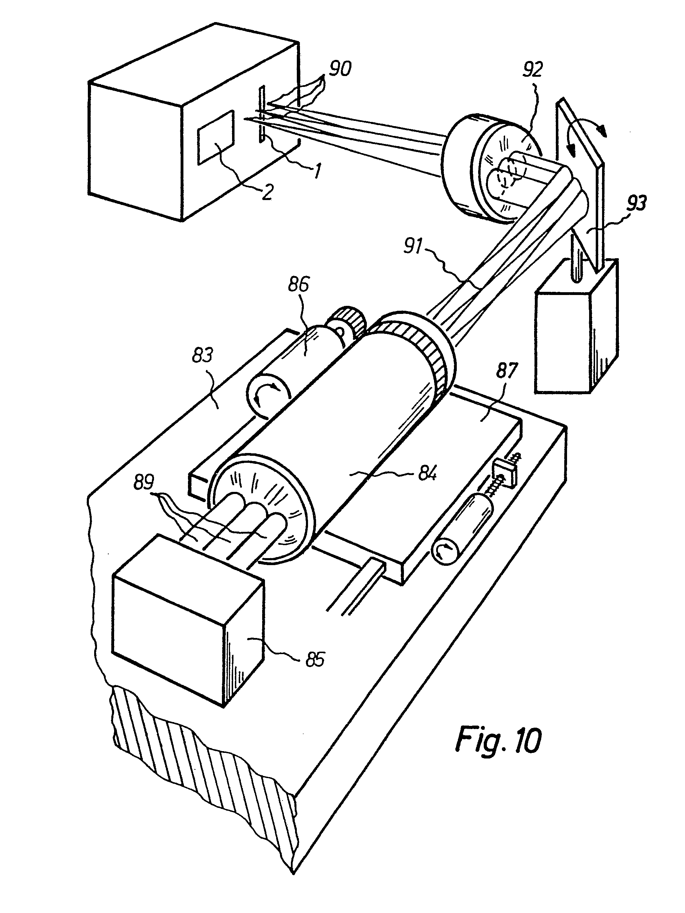

Fig. 10 zeigt ebenfalls die gleiche optische Belichtungsanordnung (83), wie sie in Fig. 8 beschrieben ist. Zusätzlich sind ein Galvanometerspiegel (93) und eine Optik (92) vorgesehen, die das Zwischenbild des Belichtungsflecks (91) in die Ebene des Spaltes (1) abbildet. Die Relativbewegung zwischen Belichtungsfleck und Spalt wird durch die Kippbewegung des Galvanometerspiegels erzeugt.

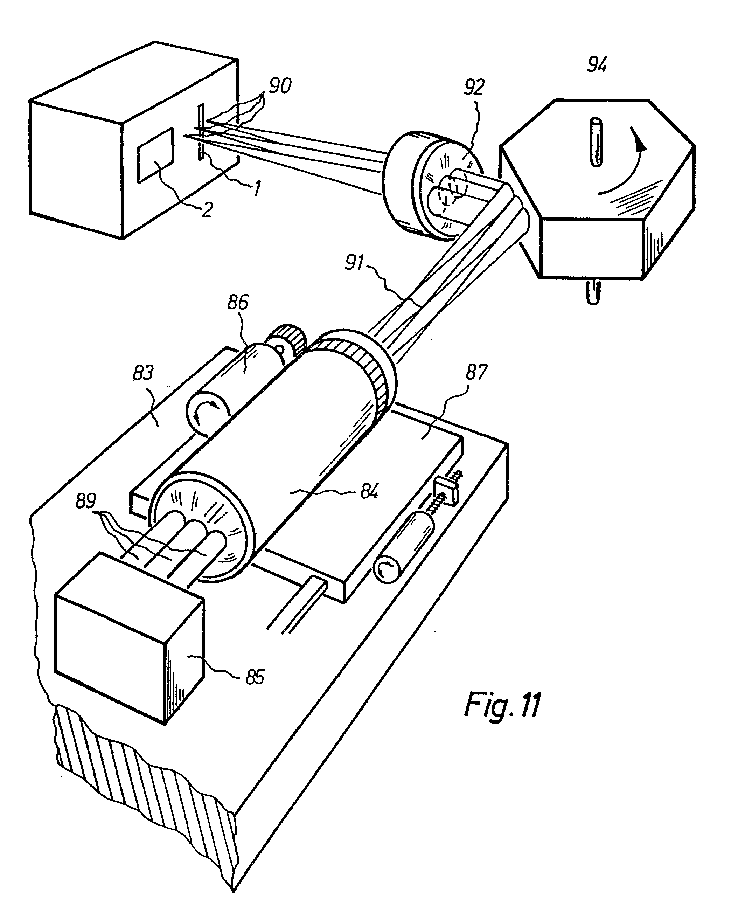

In Fig. 11 ist die gleiche Anordnung wie in Fig. 10 dargestellt, nur dass anstelle des Kippspiegels (93) ein rotierender Polygonspiegel (94) vorgesehen ist.

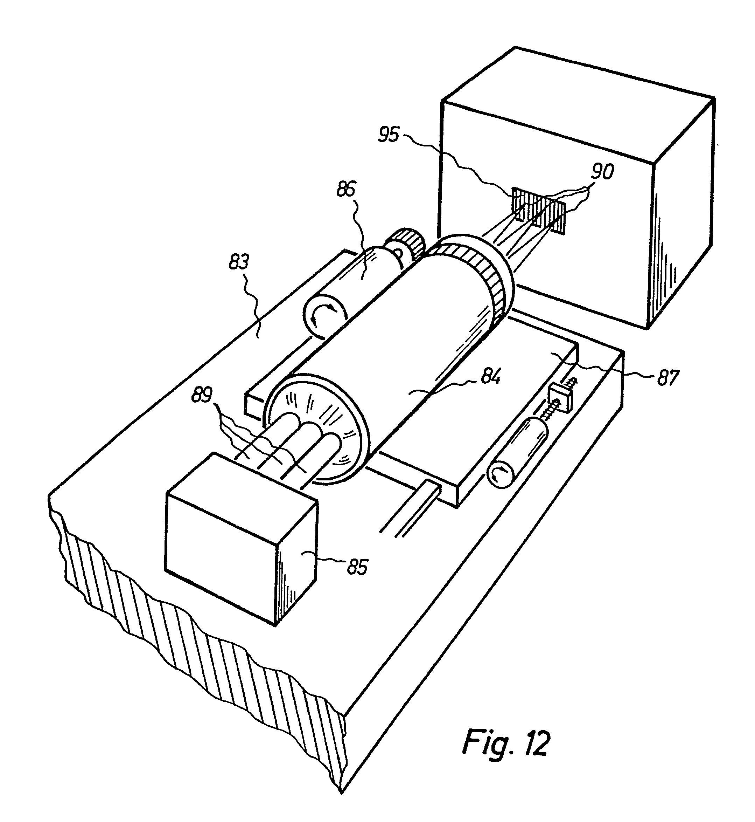

Fig. 12 zeigt die gleiche optische Belichtungsanordnung (83), wie sie in der Fig. 8 dargestellt ist. Statt der mechanischen Relativbewegung wird der Belichtungsfleck auf ein feststehendes Fotodiodenfeld (95), welches sich in der Belichtungsebene befindet, gerichtet. Anstelle der schrittweisen Abfrage des Belichtungsflecks durch den Spalt werden hier die Fotodioden in derselben Schnittweite abgefragt. In der dazu senkrechten Richtung, in der bei den anderen Anordnungen der Spalt integriert, werden entsprechende Fotodioden parallel geschaltet.

## Patentansprüche

1. Verfahren zum Einstellen und Überwachen eines Belichtungsflecks (F) zur Belichtung von lichtempfindlichem Material, wobei der Belichtungsfleck (F) aus mehreren, nebeneinander angeordneten steuerbaren Einzelstrahlen ($T_1$-$T_{12}$) zusammengesetzt wird, dadurch gekennzeichnet,

— dass der Belichtungsfleck (F) mit Hilfe eines in der Belichtungsebene befindlichen, quer zur Richtung der nebeneinander angeordneten Teilstrahlen ($T_1$-$T_{12}$) ausgerichteten Spaltes (1) vorgegebener Breite (Sp), hinter dem ein Fotowandler (4a) angeordnet ist, mittels einer Relativbewegung zwischen Spalt (1) und Belichtungsfleck (F) abgetastet und die durch den Spalt (1) hindurchtretende Lichtleistung gemessen wird, dass der gesamte Belichtungsfleck (F) auf einen weiteren Fotowandler (4b) abgebildet und eine integrale Messung der gesamten Lichtleistung des Flecks (F) vorgenommen wird,

— dass die durch die beiden Fotowandler (4a, 4b) gewonnenen elektrischen Signale in digitale Signale umgewandelt und zwischengespeichert werden,

— dass die zwischengespeicherten elektrischen Signale, die zu Messpunkten gehören, die gleichen Abstand im Belichtungsfleck haben, sukzessive bereitgestellt werden,

— dass zur Einstellung und Überwachung der Intensitätsverteilung des Belichtungsflecks die bereitgestellten äquidistanten Intensitätssignale des ersten Fotowandlers (4a) mit dem integralen Intensitätssignal des zweiten Fotowandlers (4b) normiert werden,

— dass aus den normierten Signalen die in Richtung des Spalts (F) integrierte Intensitätsverteilung des Belichtungsflecks durch Differenzierung und sukzessive Addition von um die Spaltbreite (Sp) verschobenen Werten nach folgender Gleichung bestimmt werden:

$$F_1\left(x+\frac{S}{2}-\frac{\Delta x}{2}\right) = \frac{\tilde{\mathcal{F}}(x) - \tilde{\mathcal{F}}(x-\Delta x)}{\Delta x} + F_1\left(x-\frac{S}{2}-\frac{\Delta x}{2}\right)$$

wobei $F_1(x)$ die Funktion der Intensitätsverteilung im Belichtungsfleck, x die Vorschubrichtung, S die Spaltbreite, $\Delta x$ die Abstände der äquidistanten Signale und $\tilde{\mathcal{F}}(x)$ die Intensitätsmesswerte sind,

— dass mittels eines Vergleichs der Amplituden der ermittelten integralen Intensitätsverteilung des Belichtungsflecks (F) die lokalen Maxima und Minima bestimmt werden,

— dass die Maxima und Minima durch Sollverteilungswerte dividiert und mit Koeffizienten einer Steuerkennlinie multipliziert werden, und

— dass mittels der so erhaltenen Werte die Intensitätsverteilung des betreffenden Teilstrahls ($T_1$-$T_{12}$) nachgesteuert wird.

2. Verfahren zum Einstellen und Überwachen eines Belichtungsflecks zur Belichtung (F) von lichtempfindlichem Material, wobei der Belichtungsfleck (F) aus mehreren, nebeneinander angeordneten steuerbaren Einzelstrahlen ($T_1$-$T_{12}$) zusammengesetzt wird, dadurch gekennzeichnet,

— dass der Belichtungsfleck (F) mit Hilfe eines in der Belichtungsebene befindlichen, quer zur Richtung der nebeneinander angeordneten Teilstrahlen ($T_1$-$T_{12}$) ausgerichteten Spaltes (1) vor-

gegebener Breite, hinter dem ein Fotowandler (4a) angeordnet ist, mittels einer Relativbewegung zwischen Spalt (1) und Belichtungsfleck (F) abgetastet und die durch den Spalt (1) hindurchtretende Lichtleistung gemessen wird,

— dass die durch den Fotowandler (4a) gewonnenen elektrischen Signale in digitale Signale umgewandelt und zwischengespeichert werden,

— dass die zwischengespeicherten elektrischen Signale, die zu Messpunkten gehören, die gleichen Abstand im Belichtungsfleck haben, sukzessive bereitgestellt werden,

— dass zur Einstellung der Grösse des Belichtungsflecks (F) ggf. die Intensitätssignale des Fotowandlers (4a) in einem Differenzierer (11) differenziert werden und durch sukzessive Addition von um die Spaltbreite (Sp) verschobenen Werten die integrale Intensitätsverteilung nach folgender Gleichung bestimmt und gespeichert wird:

$$F_1\left(x+\frac{S}{2}-\frac{\Delta x}{2}\right) = \frac{\widetilde{\mathcal{F}}(x)-\widetilde{\mathcal{F}}(x-\Delta x)}{\Delta x} + F_1\left(x-\frac{S}{2}-\frac{\Delta x}{2}\right)$$

wobei $F_1(x)$ die Funktion der Intensitätsverteilung im Belichtungsfleck, x die Vorschubrichtung, S die Spaltbreite, $\Delta x$ die Abstände der äquidistanten Signale und $\widetilde{\mathcal{F}}(x)$ die Intensitätsmesswerte sind,

— dass aus den ermittelten Signalen der Intensitätsverteilung des Belichtungsflecks (F) die lokalen Maxima bestimmt werden und aus den Maximalwerten ein Schwellwert für die Erkennung der Orte der äusseren Flanken des Belichtungsflecks (F) ermittelt wird,

— dass die gespeicherten Signale der Intensitätsverteilung ausgelesen und zu dem entsprechenden Intensitätswert gehörige Streckenwerte gespeichert und mit dem Schwellwert verglichen werden und dass mit dem Auslesen ein Zähler (42) inkrementiert wird, dessen Zählerstand laufend mit dem Abstand der äquidistanten Signale x multipliziert wird, wodurch zu jedem ausgelesenen Wert ein zugehöriger Streckenwert erhalten wird und bei Über- bzw. Unterschreiten des Schwellwertes an den äusseren Grenzen des Belichtungsflecks festgehalten wird, und

— dass die Differenz der beiden Streckenwerte ermittelt und mit Hilfe eines Sollwertes und des Differenzwertes die Grösse des Belichtungsflecks (F) mit Hilfe einer Einrichtung zur Veränderung der Belichuntsfleckgrösse eingestellt wird.

3. Verfahren zum Einstellen und Überwachen eines Belichtungsflecks (F) zur Belichtung von lichtempfindlichem Material, wobei der Belichtungsfleck (F) aus mehreren, nebeneinander angeordneten steuerbaren Einzelstrahlen $(T_1-T_{12})$ zusammengesetzt wird, dadurch gekennzeichnet,

— dass der Belichtungsfleck (F) mit Hilfe eines in der Belichtungsebene befindlichen, quer zur Richtung der nebeneinander angeordneten Teilstrahlen $(T_1-T_{12})$ ausgerichteten Spaltes (1) vorgegebener Breite (Sp), hinter dem ein Fotowandler (4a) angeordnet ist, mittels einer Relativbewegung zwischen Spalt (1) und Belichtungsfleck (F) abgetastet und die durch den Spalt (1) hindurchtretende Lichtleistung gemessen wird, dass der gesamte Belichtungsfleck (F) auf einen weiteren Fotowandler (4b) abgebildet und eine integrale Messung der gesamten Lichtleistung des Flecks (F) vorgenommen wird,

— dass die durch die beiden Fotowandler (4a, 4b) gewonnenen elektrischen Signale indigitale Signale umgewandelt und zwischengespeichert werden,

— dass die zwischengespeicherten elektrischen Signale, die zu Messpunkten gehören, die gleichen Abstand im Belichtungsfleck (F) haben, sukzessive bereitgestellt werden,

— dass zur Einstellung und Überwachung der Fokussierung des Belichtungsflecks (F) die bereitgestellten äquidistanten Intensitätssignale des ersten Fotowandlers (4a) mit dem integralen Intensitätssignal des zweiten Fotowandlers (4b) normiert werden,

— dass ggf. aus den normierten Signalen die in Richtung des Spaltes (1) integrierte Intensitätsverteilung des Belichtungsflecks (F) durch Differenzierung und sukzessive Addition von um die Spaltbreite (Sp) verschobenen Werten nach folgender Gleichung bestimmt wird:

$$F_1\left(x+\frac{S}{2}-\frac{\Delta x}{2}\right) = \frac{\widetilde{\mathcal{F}}(x)-\widetilde{\mathcal{F}}(x-\Delta x)}{\Delta x} + F_1\left(x-\frac{S}{2}-\frac{\Delta x}{2}\right)$$

wobei $F_1(x)$ die Funktion der Intensitätsverteilung im Belichtungsfleck, x die Vorschubrichtung, S die Spaltbreite, $\Delta x$ die Abstände der äquidistanten Signale und $\widetilde{\mathcal{F}}(x)$ die Intensitätsmesswerte sind,

— dass aus den ermittelten bzw. normierten Intensitätssignalen des ersten Fotowandlers die lokalen Maxima und Minima aufaddiert werden,

— dass aus den erhaltenen Summen der lokalen Maxima und Minima der Modulationsgrad ermittelt wird, indem die Summe der Maximalwerte durch die Summe der Minimalwerte geteilt und das Resultat wiederum durch einen Sollwert für den Modulationsgrad geteilt wird, und dass das Resultat der Division durch den Sollwert mit einem Koeffizienten einer Steuerkennlinie multipliziert und dass mittels der so erhaltenen Werte die Fokuseinstellung nachgesteuert wird.

4. Verfahren zum Einstellen und Überwachen eines Belichtungsflecks (F) zur Belichtung von lichtempfindlichem Material, wobei der Belichtungsfleck (F) aus mehreren, nebeneinander angeordneten steuerbaren Einzelstrahlen $(T_1-T_{12})$ zusammengesetzt wird, dadurch gekennzeichnet,

— dass der Belichtungsfleck (F) mit Hilfe eines in der Belichtungsebene befindlichen, quer zur Richtung der nebeneinander angeordneten Teilstrahlen $(T_1-T_{12})$ ausgerichteten Spaltes (1) vorgegebener Breite (Sp), hinter dem ein Fotowandler (4a) angeordnet ist, mittels einer Relativbewegung zwischen Spalt und Belichtungsfleck abgetastet und die durch den Spalt hindurchtretende Lichtleistung gemessen wird,

— dass der gesamte Belichtungsfleck auf einen weiteren Fotowandler abgebildet und eine integrale Messung der gesamten Lichtleistung des Flecks (F) vorgenommen wird,

– dass die durch die beiden Fotowandler (4a, 4b) gewonnenen elektrischen Signale in digitale Signale umgewandelt und zwischengespeichert werden,

– dass die zwischengespeicherten elektrischen Signale, die zu Messpunkten gehören, die gleichen Abstand im Belichtungsfleck (F) haben, sukzessive bereitgestellt werden,

– dass zur Einstellung und Überwachung der Fokussierung des Belichtungsflecks (F) durch Bildung des Differenzenquotienten der bereitgestellten Signale die Steigungswerte des Signalverlaufs ermittelt und mit in Registern gespeicherten Maximal- bzw. Minimalwerten verglichen werden,

– dass die grössten Steigerungswerte der ansteigenden und abfallenden Flanke gespeichert und anschliessend subtrahiert werden und dass das Resultat durch einen abgespeicherten Sollwert dividiert wird, wodurch ein Steuersignal für die Fokuseinstellung erzeugt wird.

5. Verfahren nach einem der Ansprüche 1 bis 4, dadurch gekennzeichnet, dass der Belichtungsfleck zur Erzeugung der Relativbewegung durch einen Vorschub der optischen Anordnung, durch die der Belichtungsfleck erzeugt wird, über den Spalt bewegt wird.

6. Verfahren nach einem der Ansprüche 1 bis 4, dadurch gekennzeichnet, dass der Spalt zur Erzeugung der Relativbewegung beispielsweise mittels einer rotierenden Scheibe oder eines Linearvorschubs über den Belichtungsfleck bewegt wird.

7. Verfahren nach einem der Ansprüche 1 bis 4, dadurch gekennzeichnet, dass zur Erzeugung der Relativbewegung der Belichtungsfleck durch eine optische Ablenkvorrichtung, beispielsweise durch einen Galvanometerspiegel oder einen Polygonspiegel, über die Fotowandler bewegt wird.

8. Verfahren nach einem der Ansprüche 1 bis 4, dadurch gekennzeichnet, dass anstelle des ersten und zweiten Fotowandlers eine Zeile oder ein Feld von Fotowandlern, beispielsweise eine CCD-Zeile oder ein Fotodiodenarray, verwendet wird, auf der der Belichtungsfleck abgebildet wird und die Signale nacheinander digital gespeichert werden.

## Claims

1. Method of adjusting and monitoring an exposure spot (F) for exposure of photosensitive material, the exposure spot (F) comprising several controllable separate beams ($T_1$-$T_{12}$) situated side by side, characterized in that the exposure spot (F) is scanned by means of a gap (1) of preset width (Sp) situated in the plane of exposure and aligned transversely to the direction of the component beams ($T_1$-$T_{12}$) arranged side by side, behind which is situated a phototransducer (4a), and by means of a relative displacement between the gap (1) and the exposure spot (F), and the luminous output passing through the gap (1) is measured, that the entire exposure spot (F) is reproduced on another phototransducer (4b) and an integral measurement of the total luminous output of the spot (F) is performed, that the electrical signals obtained by means of the two phototransducers (4a, 4b) are converted into digital signals and placed in intermediate storage, that the electrical signals placed in intermediate storage which pertain to mensuration dots having the same spacing in the exposure spot are placed in readiness successively, that for the purpose of adjusting and monitoring the intensity distribution of the exposure spot, the equidistant intensity signals of the first phototransducer (4a) placed in readiness are normalised with the integral intensity signals of the second phototransducer (4b) that, from the normalised or standardised signals, the intensity distribution of the exposure spot which is integrated in the direction of the gap or slot (F) is determined by differentiation and successive addition of values displaced by the slot width (Sp) according to the following equation:

$$F_1\left(x+\frac{S}{2}-\frac{\Delta x}{2}\right) = \frac{\widetilde{\mathcal{F}}(x)-\widetilde{\mathcal{F}}(x-\Delta x)}{\Delta x} + F_1\left(x-\frac{S}{2}-\frac{\Delta x}{2}\right)$$

wherein $F_1(x)$ is the intensity distribution function in the exposure spot, x the feed direction, S the slot width, $\Delta x$ the spacings of the equidistant signals and $\widetilde{\mathcal{F}}(x)$ the intensity readings, that the local maxima and minima are determined by comparison of the amplitudes of the integral intensity distribution established for the exposure spot (F), that the maxima and minima are divided by nominal distribution values and multiplied by coefficients of a control characteristic line, and that the intensity distribution of the component beam ($T_1$-$T_{12}$) in question is placed under follow-up control by means of the values thus obtained.

2. Method of adjusting and monitoring an exposure spot for exposure (F) of photosensitive material, wherein the exposure spot (F) comprises several adjacently arranged controllable separate beams ($T_1$-$T_{12}$), characterized in that the exposure spot (F) is scanned by means of a slot (1) of predetermined width, which is present in the exposure plane, is aligned transversely to the direction of the mutually adjacently situated component beams ($T_1$-$T_{12}$) and behind which is situated a phototransducer (4a), by means of a relative displacement between the slot (1) and the exposure spot (F) and that the luminous intensity passing through the slot (1) is measured, that the electrical signals obtained by means of the phototransducer (4a) are converted into digital signals and placed in intermediate storage, that the electrical signals placed in intermediate storage and which pertain to mensuration dots having identical spacings within the exposure spot are placed in readiness successively, that for adjustment of the size of the exposure spot (F) the intensity signals of the phototransducer (4a) are differentiated in a differentiator (11) if appropriate and that the integral intensity distribution is determined according to the following equation by successive addition of values displaced by the slot width (Sp) and stored

$$F_1\left(x+\frac{S}{2}-\frac{\Delta x}{2}\right) = \frac{\widetilde{\mathscr{F}}(x) - \widetilde{\mathscr{F}}(x-\Delta x)}{\Delta x} + F_1\left(x-\frac{S}{2}-\frac{\Delta x}{2}\right)$$

wherein $F_1(x)$ is the intensity distribution function in the exposure spot, x the feed direction, S the slot width, $\Delta x$ the spacings of the equidistant signals, and $\widetilde{\mathscr{F}}(x)$ the intensity readings, that the local maxima are determined from the detected signals of the intensity distribution of the exposure spot (F) and that, from the maximum values, a threshold value is determined for recognition of the loci of the external outlines of the exposure spot (F), that the stored intensity distribution signals are read out and distance values pertaining to the corresponding intensity value are stored and compared to the threshold value and that said readout is applied to increment a counter (42) whose count reading is continuously multiplied by the spacing of the equidistant signals x, whereby a corresponding distance value is obtained for each value read out and is retained if the threshold value is exceeded or not reached.

3. Method of adjusting and monitoring an exposure spot (F) for exposure of photosensitive material, the exposure spot (F) comprising several separate controllable beams $(T_1-T_{12})$ situated side by side, characterized in that the exposure spot (F) is scanned by means of a slot (1) of preset width (Sp) situated in the plane of exposure and aligned transversely to the direction of the component beams $(T_1-T_{12})$ arranged side by side and behind which is situated a phototransducer (4a), and by means of a relative displacement between the slot (1) and the exposure spot (F), and the luminous output passing through the slot (1) is measured, that the entire exposure spot (F) is reproduced on another phototransducer (4b) and an integral measurement of the total luminous output of the spot (F) is performed, that the electrical signals obtained by means of the two phototransducers (4a, 4b) are converted into digital signals and placed in intermediate storage, that the intermediately stored electrical signals pertaining to mensuration dots having the same spacing in the exposure spot (F) are placed in readiness successively, that for adjusting and monitoring the focussing of the exposure spot (F), the prepared equidistant intensity signals of the first phototransducer (4a) are standardised with the integral intensity signal of the second phototransducer (4b), that the intensity distribution of the exposure spot (F) integrated in the direction of the slot (1) is determined if appropriate by differentiation and successive addition of values displaced by the slot width (Sp) in accordance with the following equation:

$$F_1\left(x+\frac{S}{2}-\frac{\Delta x}{2}\right) = \frac{\widetilde{\mathscr{F}}(x) - \widetilde{\mathscr{F}}(x-\Delta x)}{\Delta x} + F_1\left(x-\frac{S}{2}-\frac{\Delta x}{2}\right)$$

wherein, $F_1(x)$ is the intensity distribution function in the exposure spot, x the feed direction, S the slot width, $\Delta x$ the spacings of the equidistant signals and $\widetilde{\mathscr{F}}(x)$ the intensity readings, that the local maxima and minima iof the detected or standardised intensity signals of the first phototransducer are summated, that the degree of modulation is determined from the resultant sums of the local maxima and minima, by dividing the sum of the maximum values by the sum of the minimum values and by again dividing the result by a nominal value for the degree of modulation, and that the result of the division by the nominal value is multiplied by a coefficient of a control characteristic and that the focus adjustment is placed under follow-up control by means of the values thus obtained.

4. Method of adjusting and monitoring an exposure spot (F) for exposure of photosensitive material, the exposure spot (F) comprising several separate controllable beams $(T_1-T_{12})$ situated side by side, characterized in that the exposure spot (F) is scanned by means of a slot (1) of preset width (Sp) situated in the plane of exposure and aligned transversely to the direction of the component beams $(T_1-T_{12})$ arranged side by side and behind which is situated a phototransducer(4a), and by means of a relative displacement between the slot (1) and the exposure spot (F), and the luminous output passing through the slot (1) is measured, that the entire exposure spot (F) is reproduced on another phototransducer (4b) and an integral measurement of the total luminous output of the spot (F) is performed, that the electrical signals obtained by means of the two phototransducers (4a, 4b) are converted into digital signals and placed in intermediate storage, that the intermediately stored electrical signals pertaining to mensuration dots having the same spacing in the exposure spot (F) are placed in readiness successively, that for the purpose of adjusting and monitoring the focussing of the exposure spot (F), the incremental values of the signal graph are determined by forming the differential quotient of the prepared signals and are compared to maximum or minimum values stored in registers, that the greatest incremental values of the rising and descending flank are stored and subsequently subtracted and that the result is divided by a stored nominal value whereby a signal is generated for focus adjustment.

5. Method according to one of the Claims 1 to 4, characterized in that the exposure spot is moved over the slot to engender the relative displacement by means of an advance of the optical system by means of which the exposure spot is engendered.

6. Method according to one of the Claims 1 to 4, characterized in that the slot is moved over the exposure spot to engender the relative displacement, for example by means of a rotary disc or of a linear advance.

7. Method according to one of the Claims 1 to 4, characterized in that the exposure spot is moved over the phototransducer to engender relative displacement by means of an optical deflector device, for example by means of a galvanometer mirror or of a polygonal reflector.

8. Method according to one of the Claims 1 to 4, characterized in that a line or area of phototransducers, for example a CCD line or a photodiode array, on which the exposure spot is depicted, is utilised instead of the first and second phototransducer and that the signals are successively stored digitally.

## Revendications

1. Procédé pour le réglage et la surveillance d'un spot d'éclairement (f) pour éclairer un matériau sensible à la lumière, ce spot d'éclairement (F) étant composé de plusieurs faisceaux individuels ($T_1$ à $T_{12}$) susceptibles d'être commandés et disposés les uns à côté des autres, procédé caractérisé en ce que:

— le spot d'éclairement (F) est balayé à l'aide d'une fente (1) de largeur prédéfinie (Sp) se trouvant dans le plan d'éclairement en étant orientée transversalement par rapport à la direction des faisceaux partiels ($T_1$ à $T_{12}$) disposés les uns à côté des autres, et derrière laquelle est placé un photo-convertisseur (4a), le balayage s'effectuant par un déplacement relatif entre la fente (1) et le spot d'éclairement (F), et la puissance lumineuse traversant la fente (1) étant mesurée, tandis que l'ensemble du spot d'éclairement (F) est appliqué à un autre photo-convertisseur (4b) et qu'il est procédé à une mesure intégrale de la puissance lumineuse totale du spot d'éclairement (F),

— les signaux électriques obtenus grâce aux deux photo-convertisseurs (4a, 4b) sont convertis en signaux numériques et mémorisés temporairement, les signaux électriques ainsi mémorisés temporairement, qui appartiennent aux points de mesure présentant le même intervalle dans le spot d'éclairement, étant successivement rendus disponibles,

— pour le réglage et la surveillance de la répartition de l'intensité du spot d'éclairement, les signaux d'intensité équidistants ainsi rendus disponibles du premier photo-convertisseur (4a) sont normalisés avec le signal intégral d'intensité du second photo-convertisseur (4b),

— à partir des signaux ainsi normalisés, la répartition d'intensité intégrée en direction de la fente (F) du spot d'éclairement est déterminée par différenciations et successives additions des valeurs décalées de la largeur (Sp) de la fente selon l'égalité suivante:

$$F_1\left(x+\frac{S}{2}-\frac{\Delta x}{2}\right) = \frac{\widetilde{\mathcal{F}}(x)-\widetilde{\mathcal{F}}(x-\Delta x)}{\Delta x} + F_1\left(x-\frac{S}{2}-\frac{\Delta x}{2}\right)$$

$F_1(x)$ étant la fonction de la répartition d'intensité dans le spot d'éclairement, x étant la direction de décalage, S étant la largeur de la fente, $\Delta x$ étant les intervalles des signaux équidistants et $\widetilde{\mathcal{F}}(x)$ étant les valeurs de mesure de l'intensité,

— les maxima et les minima locaux étant déterminés par une comparaison des amplitudes de la répartition intégrale ainsi déterminée de l'intensité du spot d'éclairement (F),

— ces maxima et ces minima étant divisés par les valeurs de consigne de répartition et multipliés par des coefficients d'une courbe caractéristique de commande,

— la répartition d'intensité du faisceau partiel ($T_1$ à $T_{12}$) étant commandée au moyen des valeurs ainsi obtenues.

2. Procédé pour le réglage et la surveillance d'un spot d'éclairement (F) pour l'éclairement d'un matériau sensible à la lumière, ce spot d'éclairement (F) étant composé de plusieurs faisceaux individuels ($T_1$ à $T_{12}$) susceptibles d'être commandés et disposés les uns à côté des autres, procédé caractérisé en ce que:

— le spot d'éclairement (F) est balayé à l'aide d'une fente (1) de largeur prédéfinie se trouvant dans le plan d'éclairement en étant orientée transversalement par rapport à la direction des faisceaux partiels ($T_1$ à $T_{12}$) disposés l'un à côté de l'autre, et derrière laquelle est placé un photo-convertisseur (4a), le balayage s'effectuant par un déplacement relatif entre la fente (1) et le spot d'éclairement (F); et la puissance lumineuse traversant la fente (1) étant mesurée,

— les signaux électriques obtenus par l'intermédiaire des photo-convertisseurs (4a) étant convertis en signaux numériques et mémorisés temporairement,

— les signaux électriques ainsi mémorisés temporairement, qui appartiennent à des points de mesure présentant le même intervalle sur le spot d'éclairement, sont rendus disponibles successivement,

— pour le réglage de la grandeur du spot d'éclairement (F) les signaux d'intensité du photo-convertisseur (4a) sont éventuellement différenciés dans un différenciateur (11) et par successives additions de valeurs décalées de la largeur (Sp) de la fente, la répartition intégrale de l'intensité étant déterminée et mémorisée selon l'égalité suivante:

$$F_1\left(x+\frac{S}{2}-\frac{\Delta x}{2}\right) = \frac{\widetilde{\mathcal{F}}(x)-\widetilde{\mathcal{F}}(x-\Delta x)}{\Delta x} + F_1\left(x-\frac{S}{2}-\frac{\Delta x}{2}\right)$$

$F_1(x)$ étant la fonction de la répartition de l'intensité dans le spot d'éclairement, x étant la direction de décalage, S étant la largeur de la fente, $\Delta x$ étant les intervalles des signaux équidistants, $\widetilde{\mathcal{F}}(x)$ étant les valeurs de mesure de l'intensité,

— les maxima locaux sont déterminés à partir des signaux ainsi obtenus de la répartition de l'intensité du spot d'éclairement (F) et à partir des valeurs maximales une valeur de seuil est obtenue pour reconnaître les emplacements des flancs externes du spot d'éclairement (F),

— les signaux mémorisés de la répartition d'intensité sont lus et les valeurs d'intervalles appartenant à la valeur d'intensité correspondante sont mémorisées et sont comparées avec la valeur de seuil, tandis qu'avec cette lecture un compteur (42) est incrémenté, compteur dont l'état de comptage est couramment multiplié par l'intervalle des signaux équidistants x, grâce à quoi une valeur d'intervalles associés est obtenue pour chaque valeur lue et est fixée aux limites extérieures du spot d'éclairemet lors du franchissement vers le haut ou vers le bas de la valeur de seuil,

— la différence des deux valeurs d'intervalles est déterminée et, à l'aide d'une valeur de consigne et de la valeur de la différence, la grandeur du spot d'éclairement (F) est réglée à l'aide d'un dispositif permettant de modifier la grandeur du spot d'éclairement.

3. Procédé pour le réglage et la surveillance d'un spot d'éclairement (F) pour éclairer un matériau sensible à la lumière, ce spot d'éclairement (F) étant composé de plusieurs faisceaux individuels ($T_1$ à $T_{12}$) susceptibles d'être commandés et disposés les uns à côté des autres, procédé caractérisé en ce que:

— le spot d'éclairement (F) est balayé à l'aide d'une fente (1) de largeur prédéfinie (Sp) se trouvant dans le plan d'éclairement en étant orientée transversalement par rapport à la direction des faisceaux partiels ($T_1$ à $T_{12}$) disposés les uns à côté des autres, et derrière laquelle est placé un photo-convertisseur (4a), le balayage s'effectuant par un déplacement relatif entre la fente (1) et le spot d'éclairement (F) et la puissance lumineuse traversant la fente (1) étant mesurée, tandis que l'ensemble du spot d'éclairement (F) est appliqué à un autre photo-convertisseur (4b) et qu'il est procédé à une mesure intégrale de la puissance lumineuse totale du spot (F),

— les signaux électriques obtenus par l'intermédiaire des deux photo-convertisseurs (4a, 4b) sont convertis en signaux numériques et mémorisés temporairement,

— les signaux électriques ainsi mémorisés temporairement qui appartiennent à des points de mesures présentant le même intervalle dans le spot d'éclairement (F) sont rendus successivement disponibles,

— pour le réglage et la surveillance de la focalisation du spot d'éclairement (F), les signaux d'intensité équidistants rendus ainsi disponibles du premier photo-convertisseur (4a) sont normalisés avec le signal intégral d'intensité du second photo-convertisseur (4b),

— la répartition d'intensité du spot d'éclairement (F) intégré en direction de la fente (1) est déterminée éventuellement à partir des signaux normalisés par différenciation et additions successives de valeurs décalées de la largeur (Sp) de la fente selon l'égalité suivante:

$$F_1\left(x+\frac{S}{2}-\frac{\Delta x}{2}\right) = \frac{\widetilde{\mathcal{F}}(x)-\widetilde{\mathcal{F}}(x-\Delta x)}{\neq} + F_1\left(x-\frac{S}{2}-\frac{\Delta x}{2}\right)$$

$F_1(x)$ étant la fonction de la répartition de l'intensité dans le spot d'éclairement, x étant la direction de décalage, S étant la largeur de la fente, $\Delta x$ étant

les intervalles des signaux équidistants, $\widetilde{\mathcal{F}}(x)$ étant les valeurs de mesure de l'intensité,

— les maximales et les minimales locales sont totalisées à partir des signaux d'intensité ainsi obtenus ou bien normalisés du premier photo-convertisseur,

— le degré de modulation est déterminé à partir des sommes obtenues des maxima et minima locaux, en divisant la somme des valeurs maximales par la somme des valeurs minimales et le résultat est à nouveau divisé par une valeur de consigne pour le degré de modulation, tandis que le résultat de la division par la valeur de consigne est multiplié par un coefficient d'une courbe caractéristique de commande et le réglage de focalisation est commandé au moyen des valeurs ainsi obtenues.

4. Procédé pour le réglage et la surveillance d'un spot d'éclairement (F) pour éclairer un matériau sensible à la lumière, ce spot d'éclairement étant composé de plusieurs faisceaux individuels ($T_1$ à $T_{12}$) susceptibles d'être commandés et disposés les uns à côté des autres, procédé caractérisé en ce que:

— le spot d'éclairement (F) est balayé à l'aide d'une fente (1) de largeur prédéfinie (Sp) se trouvant dans le plan d'éclairement en étant orientée transversalement par rapport à la direction des faisceaux partiels ($T_1$ à $T_{12}$) disposés les uns à côté des autres, et derrière laquelle est placé un photo-convertisseur (4a), le balayage s'effectuant par un déplacement relatif entre la fente et le spot d'éclairement et la puissance lumineuse traversant la fente étant mesurée, tandis que l'ensemble du spot d'éclairement est appliqué à un autre photo-convertisseur et qu'il est procédé à une mesure intégrale de la puissance lumineuse totale du spot (F),

— les signaux électriques obtenus par l'intermédiaire des deux photo-convertisseurs (4a, 4b) sont convertis en signaux numériques et mémorisés temporairement,

— les signaux électriques ainsi mémorisés temporairement qui appartiennent à des points de mesure présentant le même intervalle dans le spot d'éclairement (F) sont rendus successivement disponibles,

— pour le réglage et la surveillance de la focalisation du spot d'éclairement (F), les valeurs d'accroissement du tracé des signaux sont déterminées par formation des quotients différentiels des signaux ainsi rendus disponibles, et sont comparées avec les valeurs maximales ou minimales mémorisées dans des registres,

— les valeurs d'accroissement maximales des flancs montants et descendants sont mémorisées et ensuite soustraites et le résultat est divisé par une valeur de consigne mémorisée, grâce à quoi un signal de commande est obtenu pour le réglage de la focalisation.

5. Procédé selon une des revendications 1 à 4, caractérisé en ce que pour obtenir le déplacement relatif, le spot d'éclairement est déplacé sur la fente par un déplacement du dispositif optique grâce auquel ce spot d'éclairement est obtenu.

6. Procédé selon une des revendications 1 à 4, caractérisé en ce que, pour obtenir le déplacement relatif, la fente est, par exemple, déplacée au moyen d'un miroir tournant ou bien d'un déplacement linéaire par rapport au spot d'éclairement.

7. Procédé selon une des revendications 1 à 4, caractérisé en ce que, pour obtenir le déplacement relatif, le spot d'éclairement est déplacé par rapport au photo-convertisseur par l'intermédiaire d'un dispositif de déviation optique, par exemple par un miroir de galvanomètre ou bien par un miroir polygonal.

8. Procédé selon une des revendications 1 à 4, caractérisé en ce qu'au lieu du premier et du second photo-convertisseurs, on utilise une ligne ou bien un champ de photo-convertisseur, par exemple une ligne CCD ou bien un ensemble de photodiodes, sur lesquelles est appliqué le spot d'éclairement, tandis que les signaux sont mémorisés numériquement l'un après l'autre.

0 108 160

Fig. 1

Fig. 3

Fig. 2

Fig. 4

*Fig. 5*

*Fig. 6*

Fig. 7

Fig.8

*Fig. 9*

0 108 160

Fig. 10

29

*Fig. 11*

Fig. 12